# EUROPEAN PATENT APPLICATION

(11) **EP 4 177 690 A1**
(43) Date of publication of application: **10.05.2023**
(21) Application number: 21837619.2
(22) Date of filing: 24.05.2021
(51) Int. Cl.: G05B 19/418, G06F 30/20, G06F 30/10, G06F 3/0484, G06F 3/0481, G06Q 50/10, G06Q 50/28

(54) **SYSTEM AND METHOD FOR DESIGNING CUSTOMIZED LOGISTICS FLOW BASED ON CLOUD SERVICE**

(30) Priority: 06.07.2020 KR 20200082924
(71) Applicant: Altiall, Inc., Incheon 21984 (KR)
(72) Inventor: KANG, Byoung Jin, Incheon 21984 (KR); HA, Tae Gyu, Incheon 21984 (KR)
(74) Representative: Zinkler, Franz
(86) International application number: PCT/KR2021/006420
(87) International publication number: WO 2022/010096

(57) **Abstract**

A system and method for designing a logistics flow by using a cloud service are proposed. The method for designing the logistics flow includes connecting an agent edge terminal to a cloud server through a communication network, requesting, by the agent edge terminal, a logistics flow design service to the cloud server while the agent edge terminal is connected to the cloud server, providing, by the cloud server, the preset logistics flow design service in response to a request of the agent edge terminal, and displaying, by the agent edge terminal, the logistics flow design service on a display part.

## Description

### Technical Field

The present disclosure relates to a system and method for designing a logistics flow and, more particularly, to a system and method for designing a customized logistics flow based on a cloud service, the system and method enabling the logistics flow to be designed in accordance with various types of logistics facilities through the cloud service.

### Background Art

Logistics refers to physical distribution and includes processes of transporting, unloading, storing, and packaging produced products, in addition to a material distribution process in which distribution processing, transportation infrastructure, etc. are involved.

Recently, the importance of logistics flow management is growing due to the rapid increase in online shopping demand and consumer requirements for fast delivery. Accordingly, there is a trend that the expansion of logistics facilities and the efficiency of logistics flow are increasing, and logistics management systems for the same are increasing in scale.

Such a logistics flow is realized by various logistics facilities. Products are managed by various logistics facilities from warehousing to storage, conveyance, sorting, and shipment of the products.

For example, a storage facility for storing products, a conveyance facility for conveying the products, a sorting facility for sorting the products, and the like are required.

These various logistics facilities are respectively provided with facility controllers configured to control the operations of the corresponding logistics facilities, and the corresponding logistics facilities are respectively controlled by the facility controllers.

However, in the related art, each facility controller only controls the operation of its own logistics facility, and the control of organic operations between the logistics facilities is not provided.

To complement this problem, a parent controller is configured to control the organic operations between each facility controller. However, as the scale of logistics facilities grows and the number of operations increases, there is a problem that the load on the parent controller increases, thereby causing frequent errors.

In addition, when a new logistics facility is added to previously installed logistics facilities or an operation is added, changed, or deleted in the existing logistics facilities, there is a difficulty where the entire control program in the parent controller as well as each facility controller should be modified.

In addition, even when adding, changing, or deleting some processes for managing a logistics flow, it is necessary to add, change, or delete the corresponding processes in the facility controllers and the parent controller, and to this end, there is a cumbersome problem that all the control programs should be modified in the parent controller.

In addition, in order to design, in a user terminal, a logistics flow corresponding to logistics facilities, there is inconvenience of installing a dedicated program for designing the logistics flow in the user terminal, and in a case of a factory having large-scale logistics facilities, there occurs a problem in that an overload of the program increases when designing the logistics flow through the dedicated program.

### Disclosure

### Technical Problem

An objective of the present disclosure is to provide a system and method for designing a customized logistics flow based on a cloud service, the system and method enabling management of the logistics flow customized to various types of logistics facilities.

Another objective of the present disclosure is to provide a system and method for designing a customized logistics flow based on a cloud service, the system and method providing independent control modules equipped with essential functions that are set as standard functions to various types of logistics facilities and enabling the control module to control the functions of the logistics facilities.

Yet another objective of the present disclosure is to provide a system and method for designing a customized logistics flow based on a cloud service, the system and method enabling organic operations between various types of logistics facilities to be set in advance.

Still another objective of the present disclosure is to provide a system and method for designing a customized logistics flow based on a cloud service, the system and method being able to design functions in a plurality of logistics facilities to be added, changed, and deleted, and to design the logistics flow to be added, changed, and deleted.

Still another objective of the present disclosure is to provide a system and method for designing a customized logistics flow based on a cloud service, the system and method enabling convenient control of corresponding logistics facilities when adding a new logistics facility to a plurality of previously installed logistics facilities or when deleting or changing the existing logistics facilities.

Still another objective of the present disclosure is to provide a system and method for designing a customized logistics flow based on a cloud service, the system and method being able to design the logistics flow through the cloud service by connecting online to a cloud server without the need to install, in a user terminal, a dedicated program for designing the logistics flow suitable for logistics facilities.

Still another objective of the present disclosure is to provide a system and method for designing a customized logistics flow based on a cloud service, the system and method being able to easily and conveniently design the logistics flow when designing the logistics flow by connecting to a cloud server anytime and anywhere as long as there is no restriction on a location of a user terminal and communication is possible.

### Technical Solution

According to the present disclosure, there is provided a method for designing a customized logistics flow based on a cloud service, the method including: connecting an agent edge terminal to a cloud server through a communication network; requesting, by the agent edge terminal, a logistics flow design service to the cloud server while the agent edge terminal is connected to the cloud server; providing, by the cloud server, the preset logistics flow design service in response to a request of the agent edge terminal; and displaying, by the agent edge terminal, the logistics flow design service on a display part, wherein the displaying of the logistics flow design service may include: dividing and displaying a plurality of areas on a screen of the display part by a user's operation from the agent edge terminal and displaying a plurality of logistics facility icons in a first area among the plurality of areas; copying each logistics facility icon from the first area to a second area among the plurality of areas; inputting registration information of each logistics facility icon copied to the second area; connecting an in-port and an out-port to each other between the plurality of logistics facility icons in order to set a logistics flow between the plurality of logistics facility icons into which the registration information is input; and storing the registration information and connection information when a connection between the in-port and the out-port is completed.

In the present disclosure, each logistics facility icon may respectively correspond to control modules configured to set predetermined standard functions of logistics facilities, and allow the logistics flow using the logistics facilities to be designed through the connection between the in-port and the out-port.

In the present disclosure, in the inputting of the registration information of each logistics facility icon, types of the logistics facilities, names of the logistics facilities, and the number of in-ports and out-ports may be input.

In the present disclosure, the method may further include, after the inputting of the registration information of each logistics facility icon: double-clicking a part of each logistics facility icon; setting the in-port or the out-port to the part; and displaying the set in-port or out-port on each logistics facility icon when the in-port or the out-port is set.

In the present disclosure, in the copying of each logistics facility icon to the second area, when each logistics facility icon selected in the first area is dragged and dropped to the second area, each logistics facility icon in the first area may be copied to the second area.

In the present disclosure, in the connecting of the in-port and the out-port to each other between the plurality of logistics facility icons, when the out-port of one logistics facility icon is selected before the in-port of another logistics facility icon is selected in succession, the connection between the successively selected out-port and in-port may be automatically set.

In the present disclosure, in each logistics facility icon to which the registration information is input, change of any piece of the registration information and deletion of any one logistics facility icon may be possible.

In the present disclosure, the method may further include, after the connecting of the in-port and the out-port between the plurality of logistics facility icons: double-clicking each logistics facility icon copied to the second area; displaying, on the first area, icons of a plurality of devices constituting the logistics facilities when the double-clicking is detected; copying each device icon in the first area to the second area; and inputting registration information of each device icon copied to the second area.

In the present disclosure, the method may further include, after the inputting of the registration information of each device icon: connecting the in-port and the out-port to each other between each device icon in order to set a logistics flow between each device icon in which the registration information is input.

In the present disclosure, in the connecting of the in-port and the out-port to each other between each device icon, when the out-port of one device icon is selected before the in-port of another logistics facility icon is selected in succession, the connection between the successively selected out-port and in-port may be automatically set.

In addition, according to the present disclosure, there is provided a system for designing a customized logistics flow based on a cloud service, the system including: an agent edge terminal configured to request a logistics flow design service; a cloud server configured to provide the logistics flow design service to the agent edge terminal in response to a request from the agent edge terminal; and a communication network configured to process communication between the agent edge terminal and the cloud server, wherein the cloud server may provide a screen for displaying the logistics flow design service to the agent edge terminal, a plurality of areas may be divided on the screen, a plurality of logistics facility icons displayed in a first area among the plurality of areas may be copied from the first area to a second area, registration information of each logistics facility icon copied to the second area may be input, and an in-port and an out-port may be connected to each other between the plurality of logistics facility icons in order to set a logistics flow between the plurality of logistics facility icons to which the registration information is input.

In the present disclosure, the cloud server may include: a storage part configured to store a dedicated program for a logistics flow design; a program execution part configured to execute the dedicated program; and a server control part configured to execute the program execution part by a user's operation from the agent edge terminal and control to design the logistics flow according to the user's operation, wherein the program execution part may copy each logistics facility icon from the first area to the second area among the plurality of areas by the user's operation and connect the in-port and the out-port to each other between the plurality of logistics facility icons in order to set the logistics flow between the plurality of logistics facility icons, and each logistics facility icon may respectively correspond to control modules configured to set predetermined standard functions of logistics facilities and allow the logistics flow to be designed by each control module of the respective logistics facilities each having the in-port and the out-port thereof connected to each other.

In the present disclosure, the program execution part may be configured to display icons of a plurality of devices constituting the logistics facilities in the first area on the screen when each logistics facility icon copied to the second area by the user's operation is double-clicked, display an information input window for inputting registration information of each copied device icon on the screen when each device icon of the first area is copied to the second area, register each device icon when the registration information is entered in the information input window, and connect the in-port and the out-port to each other between each registered device icon, so that a logistics flow between each device in the logistics facilities is designed.

### Advantageous Effects

According to the present disclosure, a logistics flow may be designed in a way customized to various types of logistics facilities provided for the logistics flow.

According to the present disclosure, for various types of logistics facilities, control modules respectively setting standard functions that standardize essential functions are respectively provided for the logistics facilities independently, so that the functions of the logistics facilities may be respectively controlled through the control modules independently.

According to the present disclosure, organic functions between each of the logistics facilities may be cooperatively performed through organic combination between the control modules.

According to the present disclosure, addition, change, and deletion of functions of the corresponding logistics facilities may be respectively performed through addition, change, and deletion of the control modules, and the entire logistics flow may be organically managed and controlled.

According to the present disclosure, a design may be performed so as to enable addition, change, and deletion of functions in a plurality of logistics facilities, and to enable addition, change, and deletion of a logistics flow.

According to the present disclosure, even when a new logistics facility is added to existing logistics facilities or when an existing logistics facility is deleted or changed, the control of the corresponding logistics facility may be performed conveniently.

According to the present disclosure, there is no need to install, in a user terminal, a dedicated program for designing a logistics flow suitable for logistics facilities, and a design of the logistics flow may be performed through a cloud service by connecting online to the cloud server.

According to the present disclosure, when designing a logistics flow, a design of the logistics flow may be easily and conveniently performed by connecting to a cloud server anytime and anywhere as long as there is no restriction on a location of a user terminal and communication is possible.

### Description of Drawings

FIG. 1 is an exemplary view illustrating a logistics facility according to an exemplary embodiment of the present disclosure.
FIG. 2 is a configuration diagram illustrating a system for designing a customized logistics flow based on a cloud service according to the exemplary embodiment of the present disclosure.
FIG. 3 is a view illustrating control modules respectively assigned to logistics facilities according to the exemplary embodiment of the present disclosure.
FIG. 4 is a configuration diagram illustrating a cloud server according to the present disclosure.
FIG. 5 is an exemplary view illustrating a screen on which logistics facility icons are displayed according to the exemplary embodiment of the present disclosure.
FIG. 6 is an exemplary view illustrating a screen in which a logistics facility icon is registered according to the exemplary embodiment of the present disclosure.
FIG. 7 is an exemplary view illustrating a screen in which registration of a logistics facility in a second area is completed according to the exemplary embodiment of the present disclosure.
FIG. 8 is an exemplary view illustrating a screen in which an in-port and an out-port are set in a logistics facility icon according to the exemplary embodiment of the present disclosure.
FIG. 9 is an exemplary view illustrating a screen in which registration information of the logistics facility is modified according to the exemplary embodiment of the present disclosure.
FIG. 10 is an exemplary view illustrating a screen in which a plurality of logistics facility icons is registered according to the exemplary embodiment of the present disclosure.
FIG. 11 is an exemplary view illustrating a screen on which a connection process between logistics facilities is displayed according to the exemplary embodiment of the present disclosure.
FIG. 12 is a view illustrating examples of devices constituting logistics facilities according to the exemplary embodiment of the present disclosure.
FIG. 13 is an exemplary view illustrating a screen on which a process of additionally registering devices constituting a logistics facility is displayed according to the exemplary embodiment of the present disclosure.
FIG. 14 is an exemplary view illustrating a screen on which the connection process between a plurality of registered devices is displayed according to the exemplary embodiment of the present disclosure.

### Best Mode

Advantages and features of the present disclosure, and a method of achieving them will become apparent with reference to the exemplary embodiments described below in detail together with the accompanying drawings. However, the present disclosure is not limited to the exemplary embodiments disclosed below, but will be implemented in a variety of different forms. These exemplary embodiments are provided only to complete the disclosure of the present disclosure and to completely inform the scope of the present disclosure to those skilled in the art to which the present disclosure pertains, and the present disclosure is only defined by the scope of the claims. Like reference numerals generally denote like elements throughout the present disclosure.

Hereinafter, the present disclosure will be described in detail with reference to the accompanying drawings.

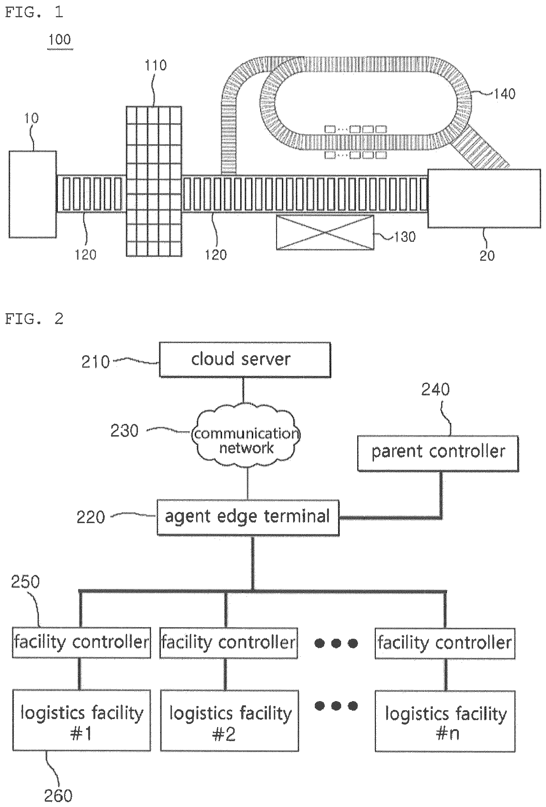

FIG. 1 is an exemplary diagram illustrating a logistics facility according to the exemplary embodiment of the present disclosure.

Referring to FIG. 1, a logistics facility applied to a method for designing a customized logistics flow for logistics facilities according to the exemplary embodiment of the present disclosure may be largely classified into a storage facility 110, a conveyance facility 120, a picking facility 130, and a sorting facility 140.

The storage facility 110 is a facility for temporarily storing products in the logistics flow. A representative example of the storage facility 110 is a rack facility. Recently, an AS/RS rack and a shuttle rack, which are equipped with an automation facility, have been widely used for such a rack.

The automated storage and retrieval system (AS/RS) rack is a facility that stores products in units of pallet or box in cells from a lower floor to an upper floor, and allows the products to be put into and taken out of a warehouse according to work instructions automatically.

In general, the AS/RS rack may include: a plurality of racks provided with cells in which products are stored; a crane configured to move between the plurality of racks; a loading/unloading device installed on the crane and configured to directly load the products to and unload the products from the cells of the plurality of racks; and a storage facility controller configured to control the crane and the loading/unloading device.

By the storage facility controller, the crane is moved back and forth along a rail of a passage formed between the plurality of racks, and the loading/unloading device is moved up and down to load products to and unload the products from desired cells.

The shuttle rack uses a method of loading pallets, and may provide a high-density loading method that has upgraded a common drive-in rack and allows a shuttle to move and stack the pallets. In this case, the shuttle moves the products on a drive-in channel, and an operator may easily load, unload, and arrange the products by using a wireless remote control.

In addition to that, as other storage facilities, there are facilities, including: a rotary rack implemented to convey products to a place where a picker is, and to freely arrange the products in a vertical or horizontal rotation manner; a mini-load configured to store and convey small items contained in storage containers and the like; and a warehouse on a flat land.

The conveyance facility 120 is a facility for conveying products. Such a conveyance facility 120 may convey the products for a smooth flow of logistics from a warehouse inlet 10 to a warehouse outlet 20.

Representative examples of the conveyance facility 120 include an automatic guided vehicle (AGV) and a conveyor.

The automatic guided vehicle (AGV) may be implemented so as to move automatically unmanned and be a facility that conveys products to a set location.

The conveyor is a facility that conveys products by using rollers, belts, or the like, and for example, the conveyor may convey the products by placing the products on a tray and moving the tray.

As another conveyance facility 120, there may be a rail guided vehicle (RGV) provided with various types of rails installed on a floor and configured to convey products while moving on the rails, an overhead hoist transport (OHT) provided with a transport vehicle moving along rails installed on a ceiling to convey the products, etc.

The picking facility 130 may include a facility that may pick up products stored in the storage facility 110 and products conveyed by the conveyance facility 120, and move the products to another place. Such a picking facility 130 may be operated automatically, manually, or semi-automatically.

For example, an item name of product is set for each cell of a rack, and the picking facility may pick a product by checking product information of the product to be picked and product information attached to an actual cell and the actual product. The products picked in this way may be conveyed to another storage facility 110 or another conveyance facility 120.

The common picking facility 130 may be implemented by using a picking robot, and may use an IC reader to check product information from an IC tag attached to a product and use a holding means to hold the product, so as to convey the product to another storage facility or a conveyor.

The sorting facility 140 is a facility for sorting the conveyed products according to a set standard. For example, the products may be classified and sorted by desired size, color, and model while conveying the products by a conveyor using the sorting facility 140.

As a representative example of the sorting facility 140, there may be a sorter, DAS, etc.

The sorter may, for example, allow a plurality of trays to be installed on a conveyor and place products on the trays, and then while the products are conveyed by the conveyor, the sorter may tilt the trays according to a preset sorting standard so as to sort the products into a predetermined product box.

The digital assorting system (DAS), for example, may check product information of a product assigned to each customer in each compartment of a shelf, and allow the picking facility to pick the product placed on the shelf by using the product information. In the DAS, a digital indicator (i.e., LED) for displaying the number of products on the shelf is provided so that the number to be picked may be checked, whereby the products may be sorted by customer.

As described above, there are various types of logistics facilities used in a logistics system. In addition, various types of logistics facilities used in the logistics system may operate independently of each other, may operate complementary to each other, or may operate organically.

Meanwhile, as in the example shown in FIG. 1, the conveyance facility 120 may be connected to the storage facility 110, and the conveyance facility 120 may be connected to the picking facility 130 and the sorting facility 140.

For example, the products stored in a first storage facility 110 may be conveyed to a second storage facility 110 and/or other conveyance facilities 120 by using the conveyance facility 120.

In addition, one or more conveyance facilities 120 may be connected to the storage facility 110. When a plurality of conveyance facilities 120 is connected to one storage facility 110, the products may be conveyed through any one conveyance facility 120 selected from among the plurality of conveyance facilities 120 according to a work instruction.

For example, when clothes and food are stored in the first storage facility 110 and then meant to be conveyed and stored to a different storage facility 110, the clothes may be conveyed to the second storage facility 110 by using a first conveyance facility, and the food may be conveyed to a third storage facility 110 by using a second conveyance facility.

In another example, the picking facility 130 may pick up products stored in the storage facility 110 and convey the products to the conveyance facility 120, and the picking facility 130 may also use the sorting facility 140 to sort the products being conveyed by the conveyance facility 120 according to a set sorting criteria.

Meanwhile, each logistics facility may be set and provided with an in-port into which products are put (i.e., the products are input/loaded) and an out-port from which the products are taken out (i.e., the products are output/unloaded). That is, for each logistics facility, the in-port and the out-port may respectively perform the roles of an entrance and an exit through which products actually are received and taken out.

For example, in a case of the storage facility 110, products may be received through an in-port thereof and stored in a designated cell by a crane and a loading/unloading device. Conversely, by unloading the products from the cell by the crane and the loading/unloading device, the products may be taken out through an out-port of the storage facility 110.

As another example, the products may be loaded into the conveyance facility 120 through an in-port of the conveyance facility 120, and the products may be unloaded from the conveyance facility 120 through an out-port of the conveyance facility 120.

In this case, it is preferable that the in-port and the out-port are organically connected to each other between the logistics facilities for the smooth flow of products. That is, in order to convey the products from a first logistics facility to a second logistics facility, the out-port of the first logistics facility and the in-port of the second logistics facility should be connected to each other.

Accordingly, when designing a logistics flow, the design should be performed such as to connect the out-port of the first logistics facility and the in-port of the second logistics facility to each other as described above. How to design a connection between logistics facilities may be a significantly important issue in order for the logistics flow to be carried out smoothly and efficiently, and in order for logistics to be accurately received or taken out, and sorted.

Accordingly, the present disclosure provides a method for easily, simply, and effectively designing the connection between the in-port and the out-port between a plurality of logistics facilities.

In addition, a sensor capable of detecting product information assigned to a corresponding product may be preferably installed in an in-port and an out-port. The product information is detected by the sensor when the products pass through the in-port and the out-port, whereby the flow of products may be tracked.

FIG. 2 is a configuration diagram illustrating the system for designing the customized logistics flow based on the cloud service according to the exemplary embodiment of the present disclosure.

Referring to FIG. 2, the system 200 for designing the customized logistics flow based on the cloud service according to the exemplary embodiment of the present disclosure may be configured to include an agent edge terminal 210, a cloud server 220, and a communication network 230.

The agent edge terminal 210 may connect to the cloud server 220 through the communication network 230 and may use the cloud service provided by the cloud server 220.

In the present exemplary embodiment, the agent edge terminal 210 may use a logistics flow design service provided by the cloud server 220.

Accordingly, a user located at a remote area may use the logistics flow design service anytime and anywhere as long as an environment enables the user to connect to the cloud server 220 by using the agent edge terminal 210.

Accordingly, the agent edge terminal 210 may be equipped with hardware (H/W) and software (i.e., program, S/W), and may be connected to the cloud server 220 through the communication network 230 and use the cloud service.

Such an agent edge terminals 210 may include various computing devices, in addition to smartphones, smart pads, laptop computers, PCs, and the like as an example.

The cloud server 220 may provide a preset cloud service to the agent edge terminal 210 connected to the communication network 230. In the present exemplary embodiment, the cloud server 220 may provide a service that is set for a design of a logistics flow according to a request of the agent edge terminal 210 connected thereto through the communication network 230.

Here, the logistics flow design service refers to a service that allows the flow of logistics using logistics facilities to be designed in an online state in the agent edge terminal 210.

That is, the logistics flow design service refers to the service that enables the agent edge terminal 210 to design the logistics flow through online by using a logistics flow design program provided by the cloud server 220 in a state of being connected to the cloud server 220 through the communication network 230.

Accordingly, the agent edge terminal 210 does not need to be loaded with a program for designing a logistics flow using logistics facilities, and a user may be provided with the logistics flow design service provided by the cloud server 220 anytime and anywhere as long as the environment enables the user to connect to the communication network 230.

Meanwhile, in the present exemplary embodiment, the agent edge terminal 210 may be connected to the parent controller 240 and each facility controller 250. The agent edge terminal 210 may transmit a logistics flow design result to the parent controller 240 and each facility controller 250 after proceeding a design of a customized logistics flow of logistics facilities, the design being provided by the cloud server 220.

The parent controller 240 may control the overall operation of the logistics system. For example, work instructions for storage, conveyance, pickup, and sorting of products may be transmitted to the agent edge terminal 210, and work results according to the work instructions may be received from each facility controller 250.

The agent edge terminal 210 may perform a function of relaying information and data between the parent controller 240 and each facility controller 250. To this end, specifically, the agent edge terminal 210 may receive work instructions transmitted from the parent controller 240 and respectively transmit work orders to each facility controller 250 according to the work instructions, and may respectively receive work results according to the work orders from each facility controller 250 and transmit the work results to the parent controller 240.

Each facility controllers 250 has a function of directly controlling a corresponding logistics facility 260. As described with reference to FIG. 1, the logistics facility 260 may be largely a storage facility 110, a conveyance facility 120, a picking facility 130, and a sorting facility 140. The facility controllers 250 may respectively control the operations of the logistics facilities 260 connected thereto.

These facility controllers 250 may communicate with the agent edge terminal 210, respectively perform the operations of the logistics facilities 260 according to the work orders received from the agent edge terminal 210, and transmit the work results of the logistics facilities 260 to the agent edge terminal 210.

For example, a facility controller 250 of the storage facility 110 may operate a crane according to a product shipment work instruction received from the agent edge terminal 210, and convey a product from a cell in which the product is located, so that a loading/unloading device unloads the product, thereby transporting the product to the conveyance facility 120 designated in the product shipment work instruction.

Meanwhile, in the present exemplary embodiment, the agent edge terminal 210 may be equipped with control modules in which essential functions respectively performed in logistics facilities 260 are standardized and set therein. That is, the control modules may be programs in which the essential functions of logistics facilities 260 are respectively set therein as the standard functions.

Here, the standard functions refer to functions that should be respectively performed for logistics facilities 260. For example, the standard functions that are set in the storage facility 110 may include: a function of unloading a product from a cell of a designated rack and conveying the product to another designated cell; a function of unloading a product of a specific cell and loading the product into a designated conveyance facility 120; and other functions.

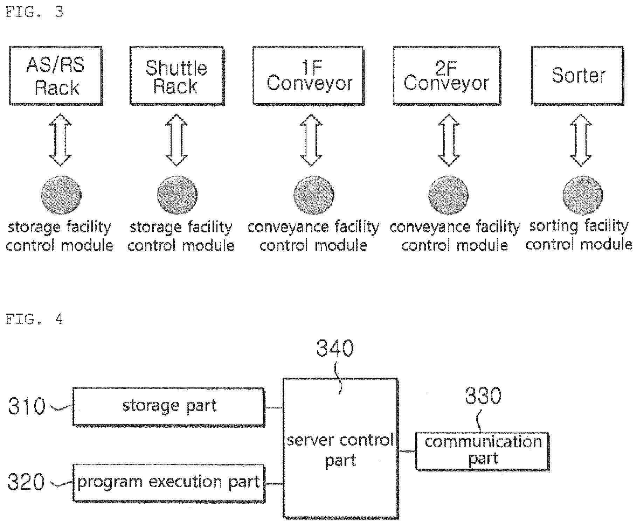

The control modules may be respectively assigned one-to-one to logistics facilities 260. That is, as in the example of FIG. 3, control modules may be respectively set for logistics facilities 260. For example, in the control modules of the storage facility 110, a control module of an AS/RS rack and a control module of a shuttle rack may be set therein. In the control modules of the conveyance facility 120, a control module of the conveyor and a control module of an OHT may be set therein.

In the present exemplary embodiment, each control module may be a control program in which the optimal functions required for operation for each logistics facility 260 are standardized to be set as a standard function.

Accordingly, when the control modules are mounted on the agent edge terminal 210, the agent edge terminal 210 may transmit work orders to respective facility controllers 250 according to the preset standard functions.

For example, in a case where an agent edge terminal 210 is equipped with control modules having standard functions of loading a first product received through a first in-port of a first storage facility into a first cell of the first storage facility and unloading a second product stored in a second cell of the first storage facility so as to convey the products to a first out-port, the agent edge terminal 210 transmits work orders to respective facility controllers 250 so as to perform the corresponding standard functions according to the standard functions that are respectively set in the corresponding control modules.

Accordingly, the facility controllers 250 may respectively drive the logistics facilities 260 directly according to such work orders, so as to perform the standard functions.

Such control modules may be respectively set, added, changed, or deleted for logistics facilities 260 independently. Accordingly, since the control modules may be respectively set for the logistics facilities 260 independently, the control modules may be independently mounted and removed from the agent edge terminal 210.

When a control module is mounted on or removed from the agent edge terminal 210, the agent edge terminal 210 may transmit the mounting and removal information of the control module to the parent controller 240. Accordingly, the parent controller 240 may transmit a work instruction based on such information.

For the smooth flow of the overall logistics, connections between logistics facilities 260 are significantly important. To this end, a design for effectively connecting control modules of respective logistics facilities 260 is essential.

Accordingly, the present disclosure provides an optimal method for designing a customized logistics flow using different types of logistics facilities. Hereinafter, the method for designing the logistics flow using control modules that are set for respective logistics facilities will be described in detail.

FIG. 4 is a configuration diagram of the cloud server according to the exemplary embodiment of the present disclosure.

Referring to FIG. 4, the cloud server 220 according to the present disclosure may include a storage part 310, a program execution part 320, a communication part 330, and a server control part 340.

The storage part 310 may store a dedicated program (i.e., software), data, information, etc., which are set for designing a logistics flow. In the present exemplary embodiment, for designing the logistics flow, the storage part 310 may select, convey, and delete control module icons to be described later, and store a program for connections between respective control modules.

The program execution part 320 may drive the dedicated program stored in the storage part 310 so that the design of the logistics flow proceeds. While the dedicated program is executed by the program execution part 320 and the design of the logistics flow is in progress, progress status and related information may be displayed on the display part of the agent edge terminal 210. Accordingly, a user may check the status and information displayed on the display part.

The communication part 330 may connect to the communication network 230. In addition, the communication part 330 may perform communication with the agent edge terminal 210 through the communication network 230.

The server control part 340 may control the overall operation of the cloud server 220. In particular, in the present exemplary embodiment, the server control part 340 may allow the program execution part 320 to execute according to data and information input by a user's operation so that a design process of the logistics flow proceeds.

In addition, the server control part 340 may transmit a logistics flow design service on a screen to the agent edge terminal 210 through the communication part 330 when the dedicated program for the logistics flow design is executed by the program execution part 320. Accordingly, the agent edge terminal 210 displays a process of the logistics flow design service through the display part (not shown) so that the user may visually check the process.

Hereinafter, with reference to the drawings, the method for designing the customized logistics flow using control modules for respective logistics facilities according to the exemplary embodiment of the present disclosure will be described in detail. In the exemplary embodiment of the present disclosure, such a design of the customized logistics flow may be preferably performed by the agent edge terminal 210 in the cloud server 220 upon request.

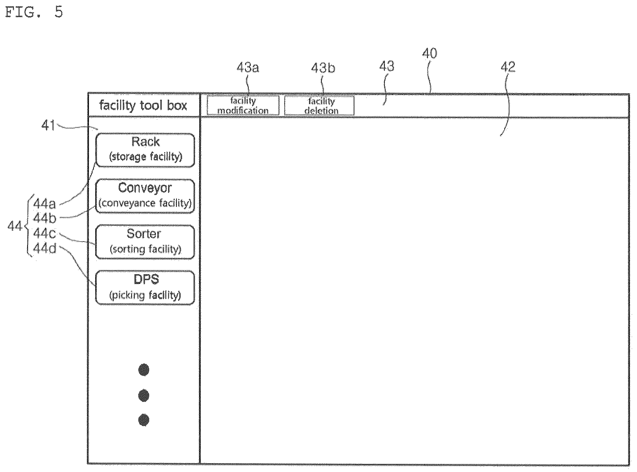

FIG. 5 is an exemplary view illustrating a screen on which logistics facility icons are displayed according to the exemplary embodiment of the present disclosure.

Referring to FIG. 5, according to the exemplary embodiment of the present disclosure as described above, the agent edge terminal 210 may connect to the cloud server 220 through the communication network 230, and display the logistics flow design service provided by the cloud server 220 on the display part (not shown). In the present exemplary embodiment, the display part may display a screen 40 for registration of a logistics facility.

The screen 40 may be divided into a plurality of areas. A plurality of logistics facility icons 44 may be displayed on a first area 41 among the plurality of areas. The logistics facility icons 44 are icons corresponding to control modules of respectively corresponding logistics facilities.

Accordingly, in the following, to register logistics facility icons 44 means to register the control modules of the respectively corresponding logistics facilities, and further may mean to register standard functions of the respectively corresponding logistics facilities, the standard functions being respectively set in the control modules.

In the drawing, an example is illustrated, wherein a storage facility icon 44a, a conveyance facility icon 44b, a picking facility icon 44c, a sorting facility icon 44d, and the like are displayed in the first area 41.

As another example, in the first area 41, certainly, other types of logistics facility icons may be additionally displayed, and previously displayed icons may be changed or deleted.

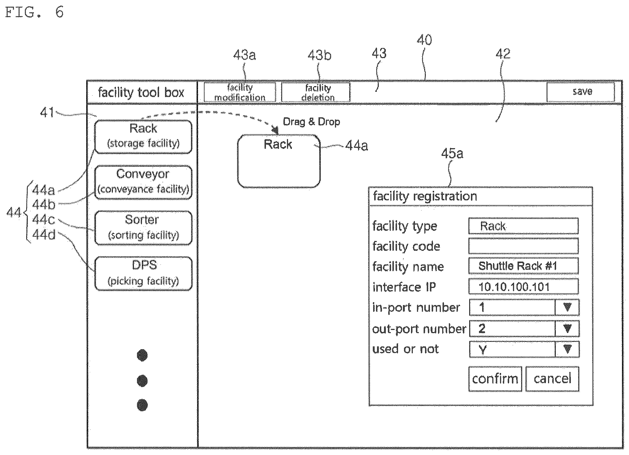

FIG. 6 is an exemplary view illustrating a screen in which a logistics facility icon is registered according to the exemplary embodiment of the present disclosure.

Referring to FIG. 6, the logistics facility icons 44 displayed in the first area 41 in the exemplary embodiment of the present disclosure may be dragged and dropped to another area by a user's operation in the agent edge terminal 210, and when dragged and dropped to another area, the logistics facility icons 44 may be copied to the corresponding area.

As such, when the logistics facility icons 44 are copied to another area, the logistics facility icons 44 may be registered in the corresponding area. This means the registration of the control modules of the respectively corresponding logistics facility as described above. In the drawing, an example is illustrated, wherein the storage facility icon 44a is copied and registered from the first area 41 to the second area 42 as an example.

The first area 41 is an area in which a plurality of logistics facility icons 44 is collected and displayed, and the second area 42 is an area in which the logistics facility icons 44 are registered.

In the present disclosure, by registering one or more logistics facility icons 44 in the second area 42 and connecting the logistics facility icons 44 to each other, a design of an overall logistics flow using the registered logistics facilities may be performed.

This will be described in detail. When the logistics facility icons 44 are copied to the second area 42 by the user's operation through the agent edge terminal 210, the control modules of the respectively corresponding logistics facilities may be registered in the second area 42. In the drawing, an example is illustrated, wherein a storage facility icon 44a of the shuttle rack is registered.

When the storage facility icon 44a is dragged and dropped from the first area 41 to the second area 42, so as to be copied, a registration input window 45a capable of entering registration information of the corresponding storage facility may be automatically displayed. Accordingly, the registration information for the storage facility may be input by the user's operation. The entered registration information may be stored, whereby the registration may be completed.

In the present exemplary embodiment, such registration information may include information such as types of logistics facilities, codes, facility names, interface IPs, the number of in-ports/out-ports, in-port/out-port IDs, and whether used or not.

Here, the types of logistics facilities may be set to any one of the storage facility, conveyance facility, picking facility, and sorting facility, and the codes may be set as information for classifying each of the preset facilities. The facility names may mean specific types for respective facilities. For example, when a type is the storage facility, it may be set to an AS/RS rack, a shuttle rack, and the like. In addition, the interface IPs may include an Internet protocol address that is set for wired/wireless communication between respective facilities.

In addition, the number of in-ports/out-ports to be used in the corresponding logistics facilities may be set, and the number of in-ports/out-ports may be set to 0 (zero), or one or more. In order to identify these in-ports/out-ports, in-port/out-port IDs may also be additionally set.

In addition, a status code for indicating status of a logistics facility and information for setting whether used or not of the logistics facility may be set together. After registering the logistic facility, when the corresponding logistic facility is used, whether used or not may be set to Y, and when not used, whether used or not may be set to N.

In this way, when registration information is registered for each logistics facility, the registration information related to the logistics facilities may be stored in the storage part 310. Through this process, each logistics facility icon 44 is registered in the second area 42. Certainly, other logistics facility icons 44b, 44c, and 44d may also be registered in the same process.

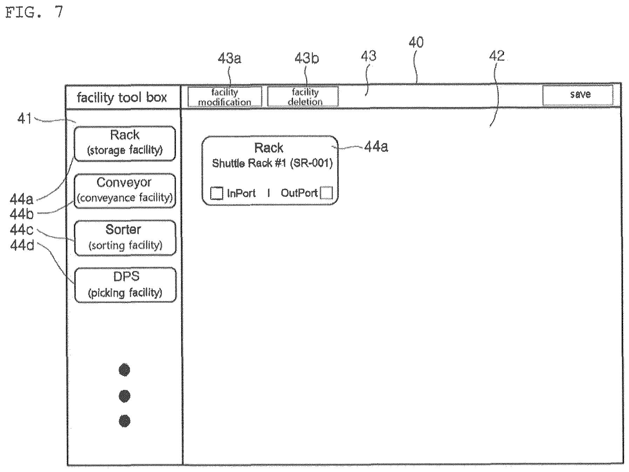

FIG. 7 is an exemplary view illustrating a screen in which registration of a logistics facility in the second area is completed according to the exemplary embodiment of the present disclosure.

Referring to FIG. 7, when the registration of the logistics facility icon in the second area 42 is completed, a piece of the registration information may be displayed on the icon. In the drawing, an example is illustrated, wherein the storage facility icon 44a is registered as an example. Such a storage facility is a rack storage facility, and an example in which the storage facility of shuttle rack #1 is specifically registered is illustrated.

Such a rack storage facility may display an in-port and an out-port according to the number of in-ports and out-ports, the number being set when entering the registration information. The in-port may be displayed in a lower left part, and the out-port may be displayed in a lower right part. Certainly, the position of the in-port and out-port may be adjusted.

Meanwhile, in another exemplary embodiment, the in-port and out-port may be set at any time in each logistics facility icon 44 displayed in the second area 42, rather than at the time of registration of each logistics facility icon 44.

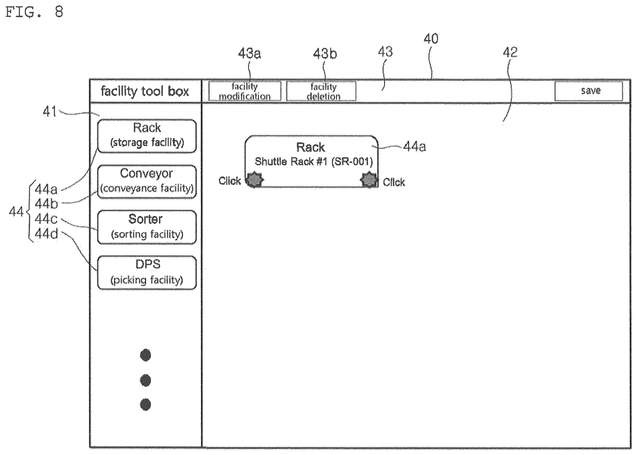

FIG. 8 is an exemplary view illustrating a screen in which the in-port and the out-port are set in the logistics facility icon according to the exemplary embodiment of the present disclosure.

Referring to FIG. 8, in another exemplary embodiment of the present disclosure, instead of entering registration information for a corresponding logistics facility after one logistics facility icon 44 is dragged and dropped from the first area 41 to the second area 42 to be copied, the in-port may be set by clicking the lower left part of the logistics facility icon 44, and the out-port may be set by clicking the lower right part of the logistics facility icon 44.

In this case, the setting of the in-port and the out-port may include designation of a location as well as the number thereof. In addition, the position of the in-port and the out-port may be changed naturally.

As shown in FIG. 8, when the in-port and out-port are set by respectively clicking the lower left and lower right parts of the logistics facility icon 44, the in-port and out-port may be displayed and registered in the same manner as in FIG. 7.

Meanwhile, the registration information of the logistics facility icon 44 copied to the second area 42 may be modified, and the logistics facility icon 44 may be deleted as well.

To this end, a facility modification button 43b capable of modifying the registration information of the logistics facility icon 44 registered in the second area 42, and a facility delete button 43c capable of deleting the logistics facility icon 44 may be displayed in a third area 43.

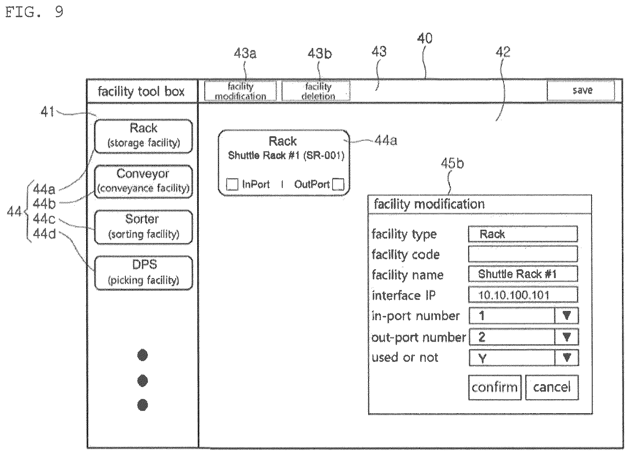

FIG. 9 is an exemplary view illustrating a screen in which registration information of the logistics facility is modified according to the exemplary embodiment of the present disclosure.

Referring to FIG. 9, in the exemplary embodiment of the present disclosure, when the facility modification button 43b is clicked after the logistics facility icon 44 registered in the second area 42 is selected, a modification input window 45b for modifying the registration information may be displayed.

Accordingly, the registration information of the logistics facility previously registered may be modified in the modification input window 45b by the user's operation through the input part.

In the drawing, an example is illustrated, wherein the modification input window 45b for modifying the registration information for the storage facility icon 44a of the shuttle rack is displayed as an example.

As described above, in the present exemplary embodiment, the plurality of logistics facility icons 44 displayed in the first area 41 may be registered in the second area 42, and the user may register necessary logistics facility icons 44 in the second area 42, whereby control modules of the respectively corresponding logistics facilities may be registered.

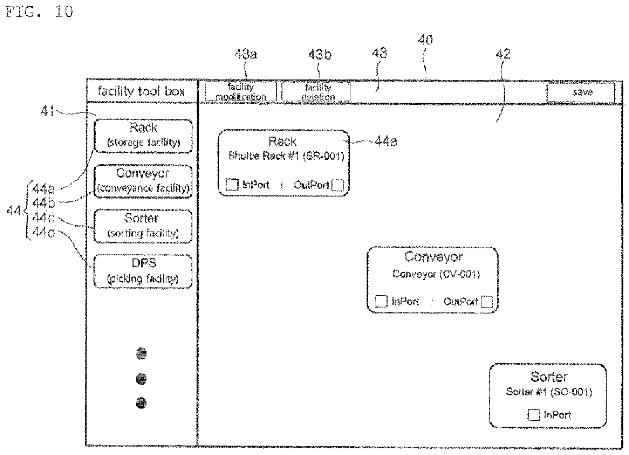

FIG. 10 is an exemplary view illustrating a screen in which the plurality of logistics facility icons is registered according to the exemplary embodiment of the present disclosure.

As an example, FIG. 10 illustrates the example in which an icon 44a of a rack facility as the storage facility, an icon 44b of a conveyor facility as the conveyance facility, and an icon 44c of a sorter as the sorting facility are registered. As such, by registering each icon, a control module of the rack facility, a control module of the conveyor facility, and a control module of the sorter facility are registered.

Since these control modules respectively include the standard functions of facilities as described above, when the control modules are mounted on the agent edge terminal 210, these standard functions may be respectively performed in the facilities by the agent edge terminal 210.

FIG. 10 is one example, and a picking facility may be added, and a sorter facility may be deleted as well.

In the method for designing the logistics flow according to the present disclosure, the interconnections between these logistics facilities is important. In some cases, an individual flow of logistics may proceed within each logistics facility, but in terms of the overall logistics system from warehousing to storage, conveyance, pickup, sorting, and shipment, the connections between each logistics facility should be made for the overall flow of logistics.

For the connections between these logistics facilities, it is preferable that the connections between the logistics facility icons are designed first. That is, by designing the connections between logistics facility icons and applying the design to actual logistics facilities, the connections between the logistics facilities may be realized according to the design of the connections between the logistics facility icons. Accordingly, the flow of logistics may proceed by the connections of the logistics facilities.

The connections of these logistics facility icons may be realized by connecting an in-port and an out-port between each logistics facility. In this case, in consideration of the flow of logistics, the in-port and the out-port between the logistics facilities may be connected to each other.

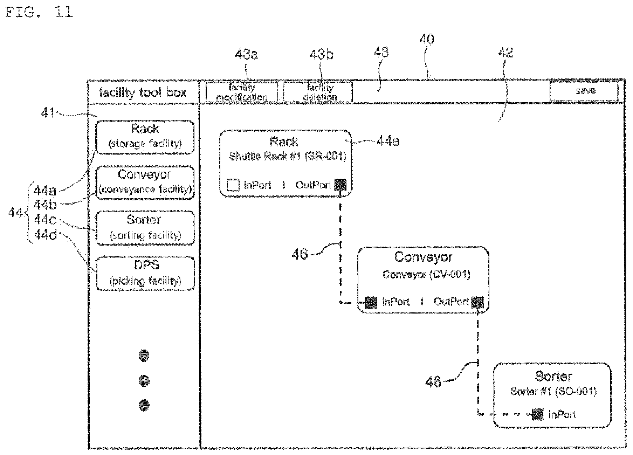

FIG. 11 is an exemplary view illustrating a screen on which a connection process between logistics facilities is displayed according to the exemplary embodiment of the present disclosure.

Referring to FIG. 11, in the exemplary embodiment of the present disclosure, an in-port and an out-port should be connected to each other in order to connect logistics facility icons to each other.

In the drawing, as an example for convenience of description, a rack facility icon 44a, a conveyor facility icon 44b, and a sorter facility icon 44c are illustrated.

When designing a flow of logistics, for example, in a case of designing that products are conveyed from a rack facility to a conveyor facility, and then sorted by a sorter after conveyed from the conveyor facility again, an out-port of the rack facility icon 44a and an in-port of the conveyor facility icon 44b may be connected to each other, and then the out-port of the conveyor facility icon 44b and an in-port of the sorter facility icon 44c may be connected to each other.

In the present exemplary embodiment, when connecting the in-port and the out-port to each other, in a case of first selecting (or clicking) an out-port of an icon to be connected before selecting (or clicking) an in-port of another icon to be connected in succession, the successively selected out-port and in-port may be automatically connected with a line (i.e., dotted line). The display part may display, on the screen 40, the connections 46 of the in-ports and the out-ports between these logistics facility icons.

When the connections are completed and stored as in the example of the drawing, the logistics flow corresponding the drawing may be designed. That is, the flow of logistics corresponding to FIG. 11 may be realized in a sequence as follows: an out-port of the rack facility 44a -> an in-port of the conveyor facility 44b -> an out-port of the conveyor facility 44b -> an in-port of the sorter facility. In this case, the products are stored in the rack facility and then while being conveyed by the conveyor, the products undergo a process of sorting by the sorter.

As described above, in the present disclosure, a user may simply design a flow of logistics using the corresponding logistics facilities by using the icons of control modules respectively corresponding to logistics facilities by operation through the input part.

In particular, in the present disclosure, in a case where the control modules respectively corresponding to standard functions of the logistics facilities are implemented independently for each logistics facility and a flow of logistics using the logistics facilities is designed, a design is performed by using the control modules respectively corresponding to the logistics facilities, whereby the customized logistics flow may be designed easily and conveniently.

Meanwhile, in the exemplary embodiment of the present disclosure, a flow of logistics using internal devices constituting a logistics facility may be designed as well. To this end, for the logistics facility icons 44 registered in the second area 42 of the screen 40, devices constituting the corresponding logistics facility may be additionally registered.

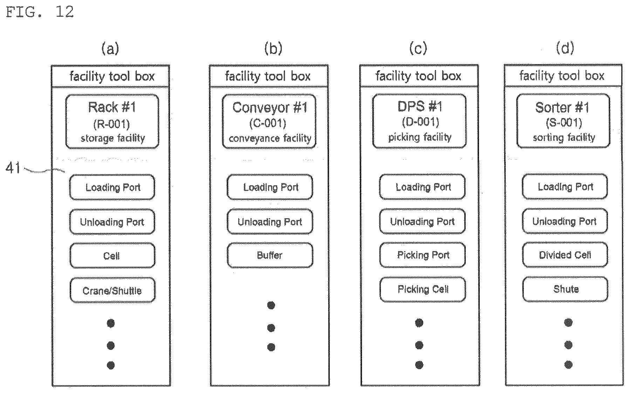

FIG. 12 is a view illustrating examples of devices constituting logistics facilities according to the exemplary embodiment of the present disclosure.

Referring to FIG. 12, each logistics facility according to the exemplary embodiment of the present disclosure may include a plurality of devices constituting the same. Accordingly, in the present disclosure, a logistics flow within each logistics facility may be designed by registering a plurality of these devices in advance and using the registered devices.

For example, as the storage facility, a rack may include devices such as a loading port, an unloading port, a cell, and a cell linker (i.e., crane, shuttle, etc.). As the conveyance facility, a conveyor may include devices such as a loading port, an unloading port, and a buffer. As the picking facility, a DPS may include devices such as a loading port, an unloading port, a picking port, and a picking cell. As the sorting facility, a sorter may include devices such as a loading port, an unloading port, a sorting cell, and a chute.

As described above, a list of the plurality of devices may be displayed in the first area 41. Specifically, when a logistics facility icon in the second area 42 is double-clicked by a user's operation, the corresponding double-clicked logistics facility icon and a list of the plurality of devices below thereof constituting the corresponding logistics facility icon may be displayed in the first area 41, as shown in (a) to (d) of FIG. 12.

Accordingly, a process of additionally registering a plurality of devices constituting a logistics facility will be described in detail.

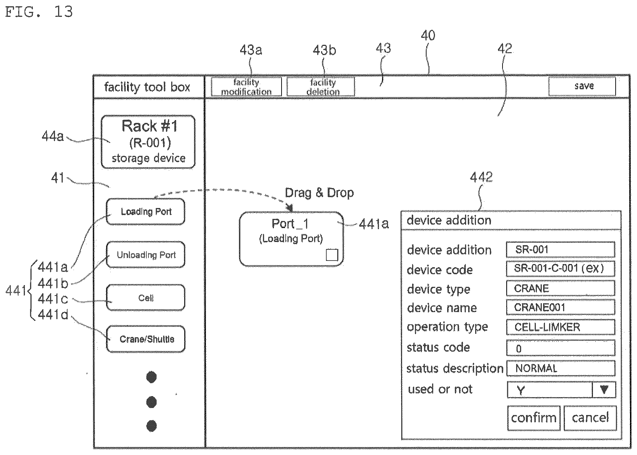

FIG. 13 is an exemplary view illustrating a screen on which a process of additionally registering the devices constituting the logistics facility is displayed according to the exemplary embodiment of the present disclosure.

Referring to FIG. 13, in the exemplary embodiment of the present disclosure, when selecting (e.g., double-clicking) the logistics facility icon 44 copied to the second area 42, device icons 441 for one or more devices constituting the corresponding logistics facility may be displayed in the first area.

In this case, by dragging and dropping the device icons 441 displayed in the first area 41 to the second area 42, the device icons 441 may be copied to the second area. In this way, when one device icon 441 is copied to the second area 42 after double-clicking the logistics facility icon 44, an input window 442 for inputting registration information for a corresponding device may be automatically displayed. A user may input the registration information of the corresponding device in the input window 442.

In the drawing, an example is illustrated, wherein the loading port 441a is registered after double-clicking the icon of the rack facility as an example. Other devices, such as an unloading port, cell, cell linker, etc., may be copied and registered in the same manner.

In this case, for each device, an in-port that is an entrance where the products are received and an out-port that is an exit where the products are taken out may be additionally registered. This is to design the flow of logistics by using each device.

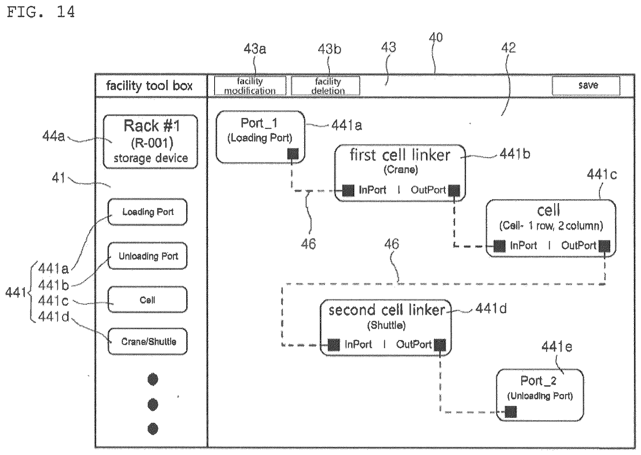

FIG. 14 is an exemplary view illustrating a screen on which the connection process between the plurality of registered devices is displayed according to the exemplary embodiment of the present disclosure.

In FIG. 14, as an example of devices constituting the rack facility, an example in which the loading port 441a, the first cell linker (i.e., crane) 441b, the cell 441c, the second cell linker (i.e., shuttle) 441d, and the unloading port 441e are registered and connected is illustrated. Certainly, added devices may be different for each logistics facility.

For example, as shown in the drawing, an in-port as an entrance for products to be received and an out-port as an exit for the products to be taken out are additionally registered in the first cell linker 441b. In addition, in-ports and out-ports may also be respectively registered in the devices of the cell 441c and the second cell linker 441d, additionally.

In the present exemplary embodiment, the flow of products for each device may be designed by additionally registering an in-port and an out-port for each of the devices including the loading port, unloading port, and other devices. Specifically, the flow of logistics in the corresponding logistics facility may be designed by setting a connection 46 of the out-port and the in-port for each device.

In the example of the drawing, the loading port 441a is connected to an in-port of a first cell linker 441b, and an out-port of the first cell linker 441b is connected to an in-port of a first row cell 441c.

In addition, an out-port of the cell 441c is connected to an in-port of a second cell linker 441d, and an out-port of the second cell linker 441d is connected to the unloading port 441e.

The logistics flow within a corresponding storage facility may be designed through the connection 46 between each device constituting the storage facility. That is, the logistics flow is realized in sequence as follows: a loading port 441a -> an in-port of a first cell linker 441b -> an out-port of the first cell linker 441b -> an in-port of a first row cell 441c -> an out-port of the first row cell 441c -> an in-port of a second cell linker 441d -> an out-port of the second cell linker 441d -> an unloading port 441e. Accordingly, the products stored in the storage facility may be taken out from the storage facility according to the flow.

Accordingly, the user may be able to design a logistics flow between logistics facilities and within each logistics facility as described above through the program execution part 320 by the operation using the input part.

Although the exemplary embodiments of the present disclosure have been described above with reference to the accompanying drawings, it will be understood that those skilled in the art to which the present disclosure pertains may implement the present disclosure in other specific forms without departing from the technical spirit or essential features thereof. Therefore, it should be understood that the above-described exemplary embodiments are illustrative in all respects and not restrictive.

## Claims

1. A method for designing a customized logistics flow based on a cloud service **characterized in that** the method comprises:
connecting an agent edge terminal (210) to a cloud server (220) through a communication network (230);
requesting, by the agent edge terminal (210), a logistics flow design service to the cloud server (220) while the agent edge terminal (210) is connected to the cloud server (220);
providing, by the cloud server (220), the preset logistics flow design service in response to a request of the agent edge terminal (210); and
displaying, by the agent edge terminal (210), the logistics flow design service on a display part,
wherein the displaying of the logistics flow design service comprises:
dividing and displaying a plurality of areas on a screen (40) of the display part by a user's operation from the agent edge terminal and displaying a plurality of logistics facility icons (44) in a first area (41) among the plurality of areas;
copying each logistics facility icon (44) from the first area (41) to a second area (42) among the plurality of areas;
inputting registration information of each logistics facility icon (44) copied to the second area (42);
connecting an in-port and an out-port to each other between the plurality of logistics facility icons (44) in order to set a logistics flow between the plurality of logistics facility icons (44) into which the registration information is input; and
storing the registration information and connection information when a connection between the in-port and the out-port is completed.

2. The method of claim 1, **characterized in that** each logistics facility icon (44) respectively corresponds to control modules configured to set predetermined standard functions of logistics facilities (260), and allows the logistics flow using the logistics facilities (260) to be designed through the connection between the in-port and the out-port.

3. The method of claim 1, **characterized in that**, in the inputting of the registration information of each logistics facility icon (44), types of the logistics facilities (260), names of the logistics facilities (260), and the number of in-ports and out-ports are input.

4. The method of claim 1, **characterized in that** the method further comprises after the inputting of the registration information of each logistics facility icon (44):
double-clicking a part of each logistics facility icon (44) ;
setting the in-port or the out-port to the part; and
displaying the set in-port or out-port on each logistics facility icon (44) when the in-port or the out-port is set.

5. The method of claim 1, **characterized in that**, in the copying of each logistics facility icon (44) to the second area (42), when each logistics facility icon (44) selected in the first area (41) is dragged and dropped to the second area (42), each logistics facility icon (44) in the first area (41) is copied to the second area (42).

6. The method of claim 1, **characterized in that**, in the connecting of the in-port and the out-port to each other between the plurality of logistics facility icons (44), when the out-port of one logistics facility icon (44) is selected before the in-port of another logistics facility icon (44) is selected in succession, the connection between the successively selected out-port and in-port is automatically set.

7. The method of claim 1, **characterized in that**, in each logistics facility icon (44) to which the registration information is input, change of any piece of the registration information and deletion of any one logistics facility icon is possible.

8. The method of claim 1, **characterized in that** the method further comprises after the connecting of the in-port and the out-port between the plurality of logistics facility icons (44) :
double-clicking each logistics facility icon (44) copied to the second area (42);
displaying, on the first area (41), icons of a plurality of devices constituting the logistics facilities (260) when the double-clicking is detected;
copying each device icon in the first area (41) to the second area (42); and
inputting registration information of each device icon copied to the second area (42).

9. The method of claim 8, **characterized in that** the method further comprises after the inputting of the registration information of each device icon:
connecting the in-port and the out-port to each other between each device icon in order to set a logistics flow between each device icon in which the registration information is input.

10. The method of claim 9, **characterized in that**, in the connecting of the in-port and the out-port to each other between each device icon, when the out-port of one device icon is selected before the in-port of another device icon is selected in succession, the connection between the successively selected out-port and in-port is automatically set.

11. A system for designing a customized logistics flow based on a cloud service **characterized in that** the system comprises:
an agent edge terminal (210) configured to request a logistics flow design service;
a cloud server (220) configured to provide the logistics flow design service to the agent edge terminal (210) in response to a request from the agent edge terminal (210); and
a communication network (230) configured to process communication between the agent edge terminal (210) and the cloud server (220),
wherein the cloud server (220) provides a screen (40) for displaying the logistics flow design service to the agent edge terminal (210),
a plurality of areas is divided on the screen (40),
a plurality of logistics facility icons (44) displayed in a first area (41) among the plurality of areas is copied from the first area (41) to a second area (42),
registration information of each logistics facility icon (44) copied to the second area (42) is input, and
an in-port and an out-port are connected to each other between the plurality of logistics facility icons (44) in order to set a logistics flow between the plurality of logistics facility icons (44) to which the registration information is input.

12. The system of claim 11, **characterized in that** the cloud server (220) comprises:
a storage part (310) configured to store a dedicated program for a logistics flow design;
a program execution part (320) configured to execute the dedicated program; and
a server control part (340) configured to execute the program execution part (320) by a user's operation from the agent edge terminal(210) and control to design the logistics flow according to the user's operation,
wherein the program execution part (320) copies each logistics facility icon (44) from the first area (41) to the second area (42) among the plurality of areas by the user's operation and connects the in-port and the out-port to each other between the plurality of logistics facility icons (44) in order to set the logistics flow between the plurality of logistics facility icons (44), and
each logistics facility icon (44) respectively corresponds to control modules configured to set predetermined standard functions of logistics facilities (260) and allows the logistics flow to be designed by each control module of the respective logistics facilities (260) each having the in-port and the out-port thereof connected to each other.

13. The system of claim 12, **characterized in that** the program execution part (320) is configured to display icons of a plurality of devices constituting the logistics facilities (260) in the first area (41) on the screen (40) when each logistics facility icon (44) copied to the second area (42) by the user's operation is double-clicked, display an information input window for inputting registration information of each copied device icon on the screen (40) when each device icon of the first area (41) is copied to the second area (42), register each device icon when the registration information is entered in the information input window, and connect the in-port and the out-port to each other between each registered device icon, so that a logistics flow between each device in the logistics facilities (260) is designed.
